Europäisches Patentamt

European Patent Office

Office européen des brevets

(11) Numéro de publication: **0 089 257**
**B1**

(12) **FASCICULE DE BREVET EUROPEEN**

(45) Date de publication du fascicule du brevet: **11.05.88**

(51) Int. Cl.⁴: **A 01 D 57/30**

(21) Numéro de dépôt: **83400386.5**

(22) Date de dépôt: **25.02.83**

(54) Faucheuse-andaineuse et procédé de regroupement d'andains.

(30) Priorité: **05.03.82 FR 8203707**

(43) Date de publication de la demande:
**21.09.83 Bulletin 83/38**

(45) Mention de la délivrance du brevet:
**11.05.88 Bulletin 88/19**

(84) Etats contractants désignés:
**DE FR GB IT NL**

(56) Documents cités:
**CH-A- 425 311**
**DE-A-2 001 374**
**DE-A-2 815 550**
**FR-A-2 328 386**
**FR-A-2 361 051**
**US-A-3 523 410**
**US-A-3 772 865**
**US-A-3 911 649**

(73) Titulaire: **SIMAG S.A.**
**12 Quai Jean Bart Boîte postale 52**
**F-35600 Redon (Ille & Vilaine) (FR)**

(72) Inventeur: **Toussaint, Yvan**
**10, rue des Cercliers**
**F-35600 Redon Ille & Vilaine (FR)**

(74) Mandataire: **Bloch, Gérard et al**
**6, rue du Faubourg Saint-Honoré**
**F-75008 Paris (FR)**

Courier Press, Leamington Spa, England.

## Description

La présente invention concerne tout d'abord une faucheuse-andaineuse, notamment à grande largeur de coupe, comprenant des moyens de coupe et de conditionnement de végétaux, et, disposés, par rapport au sens d'avancement de la faucheuse, derrière les moyens de coupe et de conditionnement, des moyens de séparation du flux des végétaux coupés en plusieurs flux de végétaux et des moyens de regroupement en andain de chaque flux de végétaux séparé.

Les moyens de regroupement de l'andain des faucheuses-andaineuses classiques comprennent généralement deux déflecteurs, ou écrans, de regroupement montés pivotant autour des deux axes verticaux disposés respectivement à proximité de la partie arrière des deux bords latéraux de la machine, de manière à pouvoir ainsi former un andain de diverses largeurs.

Lorsque la coupe est effectuée suivant une largeur normale, les déflecteurs de regroupement peuvent être positionnés pour former un andain de dimensions telles que les roues du tracteur de la faucheuse-andaineuse, lorsqu'il s'agit par exemple d'une machine tractée, chevauchent, lors d'un pas de coupe, l'andain qui a été déposé lors du pas précédent. En effet, le pas de coupe ayant une largeur normale, l'andain déposé sur le sol peut très bien avoir une largeur relativement limitée, donc inférieure à la voie du tracteur, sans pour autant que sa hauteur ne soit excessive.

En d'autres termes, un andain ne doit pas être trop large, pour que les roues du tracteur puissent le chevaucher sans rouler sur ses bordures et que les herbes coupées sèchent correctement, et il ne doit pas non plus être trop étroit, et donc trop haut, sinon les herbes ne sécheraient pas convenablement et le tracteur accrocherait l'andain et le déformerait.

Lorsque, pour gros fourrages, on veut augmenter le pas de coupe, avec des faucheuses-andaineuses plus larges, sans pour autant modifier la voie du tracteur, pour des raisons de commodité, il se pose donc le problème de former un andain ni trop large ni trop ramassé.

Par le document DE—A—2 001 374, il est déjà proposé de séparer le fourrage après sa coupe, c'est-à-dire après formation d'un flux de végétaux, et il est donc facile de proposer une machine du type mentionné ci-dessus, pour former à chaque pas de coupe, deux, ou plusieurs, andains, dont l'un peut être chevauché par les roues du tracteur au pas suivant, et qui offrent de bonnes conditions de séchage, avec, en outre, un rendement de la machine satisfaisant, puisque la somme des largeurs des andains formés après séparation du fourrage reste assez voisine de la largeur de coupe.

Toutefois, une telle machine présenterait par ailleurs un inconvénient, puisque les moyens de séparation risqueraient tout naturellement de bourrer.

On connaît, par le document FR—A—2 328 386, des unités rotatives de faucheuse-conditionneuse, pourvues de dents de conditionnement et d'épandage, et s'étendant sur toute la largeur de coupe. Ces unités rotatives, certes, visent à éviter le bourrage des moyens de coupe mais, et au-delà, leur fonction se limite à peigner et accélérer les végétaux coupés.

On connaît encore, par le document US—A—3 772 865, une faucheuse-andaineuse pourvue de plaques-tambours de regroupement d'andain, mais sans fonction d'anti-bourrage de quelconques moyens de séparation.

La présente invention vise donc à éviter un tel bourrage des moyens de séparation.

A cet effet, la présente invention concerne une faucheuse-andaineuse du type mentionné ci-dessus caractérisée par le fait que les moyens de séparation comprennent au moins un tambour rotatif à axe sensiblement vertical qui est associé aux moyens de regroupement, et que des volets sont montés sur chaque tambour rotatif afin d'éviter son bourrage en améliorant la préhension du flux de végétaux, chaque tambour rotatif étant amovible.

Grâce à l'invention, le fourrage séparé est accéléré latéralement et tout risque de bourrage des moyens de séparation est éliminé.

L'avantage de l'amovibilité du tambour associé aux moyens de regroupement réside dans le fait qu'on peut alors déplacer les moyens de séparation et d'accélération de la partie médiane de la machine, où ils sont par exemple disposés pour remplir leur fonction de séparation, aux bords latéraux, où, en combinaison cette fois avec des moyens de regroupement, ils peuvent accélérer le fourrage et éviter que les moyens de regroupement ne bourrent.

Ceci est particulièrement intéressant sur les faucheuses-andaineuses de grande largeur, avec lesquelles on veut former un seul et unique andain de largeur inférieure à la voie du tracteur. Des volets de regroupement fortement inclinés permettraient, en théorie, d'obtenir un tel andain, mais compte tenu de la grande quantité de végétaux coupés, ces volets bourreraient. Les moyens d'accélération évitent donc le bourrage de ces volets.

La présente invention concerne également une faucheuse-andaineuse notamment à grande largeur de coupe, comprenant des moyens de coupe et de conditionnement de végétaux, et, disposés, par rapport au sens d'avancement de la faucheuse, derrière les moyens de coupe et de conditionnement et près des bords latéraux de la faucheuse, des moyens de regroupement en andain des végétaux coupés, caractérisée par le fait que les moyens de regroupement sont associés à des tambours rotatifs à axe sensiblement vertical, disposés devant les moyens de regroupement par rapport au sens d'avancement de la machine, les dits tambours étant amovibles et munis de volets afin d'éviter le bourrage des tambours en améliorant la préhension du flux des végétaux.

Alors que le document US—A—3 911 649 enseigne, sur une faucheuse-andaineuse, d'incliner alternativement des volets latéraux de regroupement d'andain, et l'ensilage s'effectuant normalement andain par andain, il peut être intéressant de regrouper ou de rapprocher des andains pour réduire le nombre de passages de l'ensileuse et que celle-ci effectue par exemple deux fois moins de passages que la faucheuse-andaineuse.

A cet effet, la présente invention concerne aussi un procédé de regroupement de deux andains formés lors de deux passages successifs d'une faucheuse-andaineuse comprenant, au moins, une flèche de traction orientable des moyens de coupe des végétaux, et des moyens orientables de regroupement des végétaux situés respectivement sur les bords droit et gauche de la faucheuse-andaineuse, et disposés, par rapport au sens d'avancement de la faucheuse, derrière les moyens de coupe, procédé dans lequel lors d'un premier passage on forme un andain à droite, par rapport à l'axe central d'avancement de la faucheuse-andaineuse, les moyens de regroupement des bords droit et gauche étant respectivement redressés et fortement inclinés, et lors du passage suivant, on forme un autre andain à gauche, les moyens de regroupement étant respectivement fortement inclinés et redressés, caractérisé en ce que la flèche de traction, lors du premier passage, est fortement inclinée et lors du passage suivant, faiblement inclinée, ou vice et versa.

L'invention sera mieux comprise à l'aide de la description suivante, en référence aux dessins annexés, sur lesquels:

La fig. 1 est une vue schématique de la machine de l'invention en cours d'évolution;

La fig. 2 est une vue en perspective d'un groupe de séparation et d'accélération de la machine de la fig. 1;

La fig. 3 est une vue schématique de deux tambours de séparation et d'accélération associés;

La fig. 4 est une vue schématique de la machine de la fig. 1 modifiée;

La fig. 5 est une vue illustrant une première mise en oeuvre du procédé de regroupement de l'invention, et

La fig. 6 est une vue illustrant une deuxième mise en oeuvre du procédé de l'invention.

La faucheuse-andaineuse 1 représentée sur les dessins, est une machine tractée par un tracteur 2 par l'intermédiaire d'un timon 3, bien que l'invention pourrait également s'appliquer à des faucheuses portées, semi-portées, ou automotrices.

La faucheuse 1 est équipée, de façon classique, d'outils 4 de coupe des végétaux et d'un conditionneur 5. Les outils de coupe sont, dans le cas représenté, des têtes de coupe rotatives 4 portées par des bras et munies, chacune, d'une disque rotatif pourvu d'une lame de coupe disposée au-dessus du bras-support. Ici encore, il faut noter que l'invention ne se limite pas à de tels outils de coupe, et que la faucheuse pourrait être du type à assiettes, à tambours de coupe, ou à lame à sections et doigts.

Le conditionneur 5 représenté est un outil à griffes rotatives 6 montées solidaires en rotation d'un moyeu 7 disposé derrière les têtes de coupe 4. Des déflecteurs 8 de regroupement d'andain sont disposés derrière l'outil à griffes et montés, près des bords latéraux de la machine, pivotant sur des axes verticaux de manière à pouvoir déterminer la largeur d'andain.

Au niveau du bord latéral gauche de la machine, par rapport au sens d'avancement 9, est disposée une boîte de transmission 10, commandées par un moteur, en l'occurence celui du tracteur, et commandant, par l'intermédiaire d'un arbre de commande, la rotation des outils de coupe 4 et du conditionneur 5.

Le tracteur 2 possède un petit train avant et un grand train arrière de roues 11 qui définissent la voie du tracteur. L'écartement des roues arrière peut être augmenté mais les exploitants n'aiment pas procéder à une telle modification.

On a représenté en 12 un andain déjà formé, lors du pas de coupe précédent, et d'une largeur légérément inférieure à la voie du tracteur. Ainsi, lors du pas de coupe considéré, le tracteur chevauche cet andain 12 sans le déformer ni l'abîmer.

La largeur de coupe de la machine, correspondant pratiquement à sa propre largeur, est nettement plus grande que celle de l'andain 12. On pourrait vouloir, à l'aide des déflecteurs 8 former un andain de largeur appropriée. Mais il serait alors trop haut et les herbes coupées ne sécheraient plus correctement.

La faucheuse-andaineuse 1 comporte ainsi deux tambours, ou rouleaux, 13, 14, de séparation et d'accélération des herbes coupées par les outils 4 et conditionnées en un flux par l'outil 5. Ces tambours sont disposés sensiblement au centre de la machine, derrière le conditionneur 5 et sont associés chacun à un déflecteur.

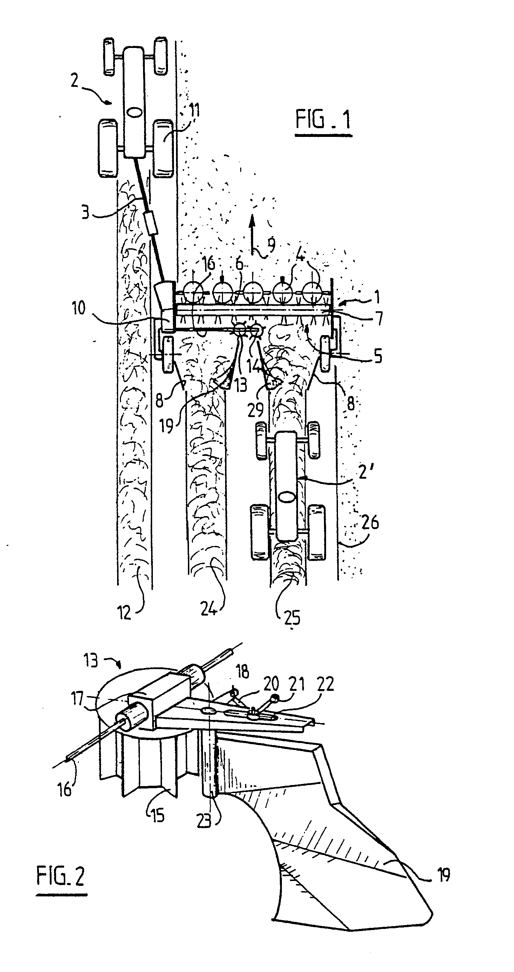

En référence à la figure 2, représentant le tambour de gauche 13, celui-ci comporte des volets 15, de préférence orientables, qui, lorsqu'ils sont entraînés en rotation dans le sens inverse des aiguilles d'une montre, sur la figure, participent à la division du flux de fourrage incident provenant du conditionneur 5 pour obliger une partie de ce fourrage à contourner le tambour, vers la gauche sur la figure, tout en l'accélérant.

Le tambour 13 est entraîné en rotation autour de son axe vertical par l'intermédiaire de la boîte de transmissions 10, d'un arbre de commande 16 et d'une boîte de renvoi d'angle 17. Le tambour 13 est monté rotatif sur une traverse 18, fixée de façon amovible, sur le châssis de la faucheuse-andaineuse, dans sa partie supérieure arrière, et s'étendant sensiblement suivant la direction opposée à celle d'avancement de la machine. Un déflecteur de regroupement 19, associé au tambour, est monté pivotant sur cette traverse autour d'un axe vertical 23, derrière le tambour 13. L'inclinaison de ce déflecteur peut être modifiée et réglée à l'aide d'une bielle 20 et d'une manette 21 coulissant dans une rainure 22 de la traverse 18.

Le deuxième tambour de droite 14 est identique au tambour 13, il est associé également à un déflecteur 29, orienté symétriquement au déflecteur 19 par rapport à la direction d'avancement de la machine, et il est entraîné en rotation, dans le sens inverse, par l'intermédiaire du même arbre 16 et d'une boîte de renvoi d'angle 27, et le tambour 14 et son déflecteur sont montés sur une deuxième traverse identique à la première.

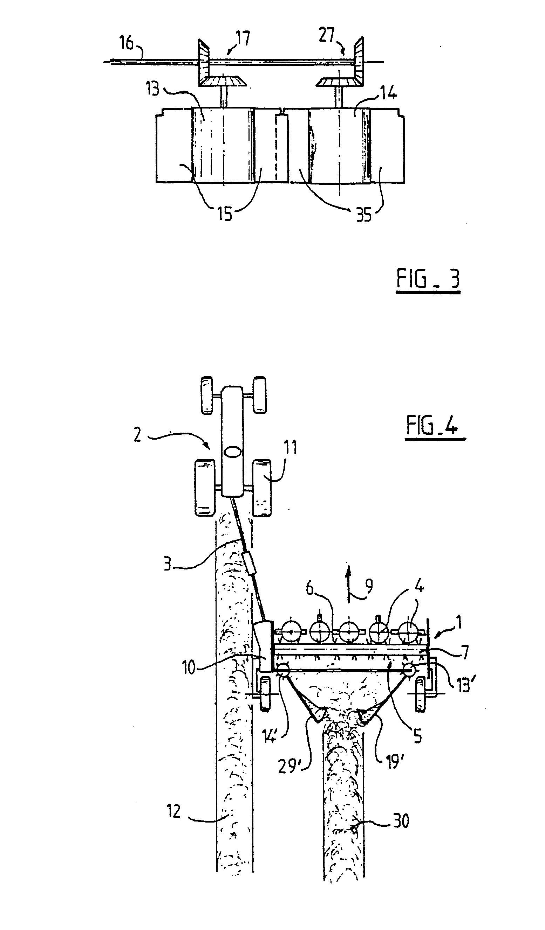

Les deux tambours de séparation et d'accélération 13, 14 sont disposés l'un à côté de l'autre, transversalement à la machine, pour séparer conjointement le même flux incident de fourrage. A cet effet, leurs volets respectifs 15 et 35 évoluent dans deux volumes secants (fig. 3).

Par l'inclinaison appropriée des déflecteurs associés aux tambours 13, 14, on forme donc deux andains 24, 25 de largeur inférieure à la voie du tracteur 2, et séparés transversalement l'un de l'autre d'une distance correspondant sensiblement à celle qui sépare les deux extrémités arrière des déflecteurs associés et permettant, au pas de coupe suivant, le passage des roues de gauche du tracteur entre eux, comme illustré en 2' sur la fig. 1. En outre, l'andain de droite 25 s'étend à une distance convenable du bord de coupe latéral droit 26 de la récolte non coupée, pour permettre le passage, au pas suivant, des roues de droite du tracteur.

Il est bien entendu qu'on a décrit et représenté une faucheuse-andaineuse à une seule paire de tambours de séparation et d'accélération médians, mais que la machine de l'invention pourrait en comporter plusieurs. A cet égard, on notera que pour former n andains, il faut munir la machine de (n−1) paires de ces tambours. Toutefois, on pourrait aussi vouloir monter, non plus une paire de tambours, mais un seul de ces tambours, bien que cette solution ne soit pas très satisfaisante, l'andain étant moins bien formé d'un côté.

De même, et pour espacer et séparer davantage les andains formés, on peut vouloir disposer plus de deux tambours les uns à côté des autres, avec plusieurs tambours adjacents tournant dans un même sens et plusieurs tambours adjacents tournant dans l'autre sens.

Grâce à l'amovibilité des groupes de séparation et d'accélération du fourrage, on peut les disposer près des bords latéraux de la machine, où, bien entendu, ils n'exercent plus de fonction de séparation, pour ne plus former qu'un seul andain 30, de largeur inférieure à la voie du tracteur, quand la récolte n'est pas trop abondante (fig. 4). Le châssis de la machine est agencé à cet effet et peut, par exemple comporter une poutre arrière percée d'orifices de réception des groupes de séparation et d'accélération. Les déflecteurs de regroupement 19' et 29' associés respectivement aux tambours d'accélération, représentés en 13' et 14', et qui ont été substitués aux déflecteurs isolés 8, ne peuvent plus bourrer, grâce à ces tambours. On remarquera que dans l'agencement de la figure 4, la position relative des tambours a été inversée par rapport à celle de la figure 1, le tambour tournant dans le sens inverse des aiguilles d'une montre se trouvant maintenant à droite, et l'autre à gauche. Quant à leur sens de rotation, ils n'ont pas, eux, été inversés.

On comprendra aisément qu'en inclinant plus ou moins les déflecteurs de regroupement 19', 29', on peut déposer l'andain où l'on veut dans la largeur de coupe. Si par exemple on incline fortement le déflecteur 19' et qu'on redresse le déflecteur 29' dans l'axe d'avancement de la machine, on déposera un andain à gauche dans le pas de coupe. Inversement, si on redresse le déflecteur 19' et qu'on incline fortement le déflecteur de gauche 29', on déposera un andain à droite dans le pas de coupe.

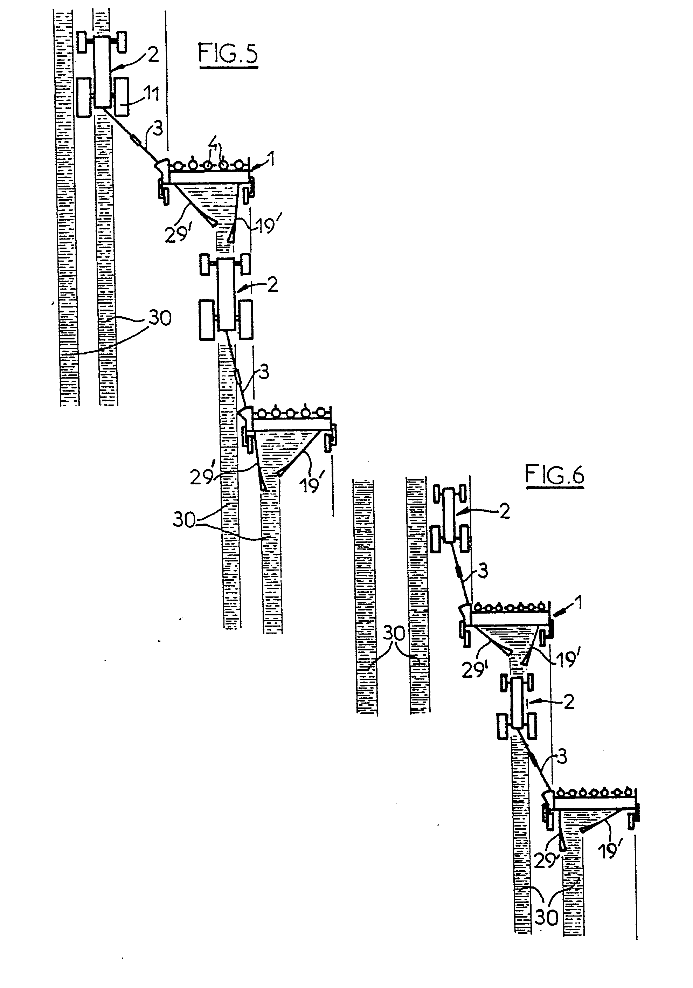

Cette façon de procéder permet de regrouper des andains, ce qui est particulièrement intéressant au niveau de l'ensilage. En effet et en référence à la figure 5, si lors d'un passage donné on dépose l'andain à droite et lors du passage suivant, on dépose l'andain à gauche, les deux andains ainsi formés se trouveront l'un près de l'autre. De cette façon, une ensileuse équipée d'un système de ramassage de largeur réduite pourra ramasser simultanément les deux andains et travaillera par conséquent avec un rendement optimal puisque son mécanisme de hachage sera alimenté de manière optimale et que le nombre de passages de l'ensileuse sur le terrain sera la moitié du nombre de passages de la faucheuse-andaineuse.

Pour réaliser ce regroupement, on procède de la manière suivante. Lors du premier passage, on dépose l'andain 30 à droite dans le pas de coupe. Pour ce faire, on redresse le volet 19' et on incline fortement le volet 29', de sorte que l'ouverture entre ces deux volets se situe à droite dans le pas de coupe, la machine étant vue dans le sens d'avancement. Par ailleurs, la flèche de traction 3 est fortement inclinée. Lors du deuxième passage, on dépose l'andain 30 à gauche dans le pas de coupe. Pour ce faire, on redresse le volet 29' et on incline fortement le volet 19', de sorte que l'ouverture entre ces deux volets se situe à gauche dans le pas de coupe. Par ailleurs, pour éviter que pendant ce passage, les roues du tracteur ne roulent sur l'andain 30 formé au passage précédent, la flèche de traction 3 est faiblement inclinée. Le passage encore suivant est réalisé comme le premier, avec l'ouverture entre les volets 19', 29' à droite dans le pas de coupe et, la flèche de traction 3 fortement inclinée, pour que le deuxième andain s'étende entre les roues du tracteur.

Il est également possible, en référence à la figure 6, si la largeur de coupe de la faucheuse est suffisante, d'inverser l'ordre d'inclinaison de la flèche de traction 3 par rapport à la mise en oeuvre précédente. En effet, si l'espace, dégagé entre un andain donné et le fourrage encore sur pied, est suffisant pour permettre le passage du tracteur, on incline faiblement la flèche de traction 3 lorsque l'andain est déposé à droite dans le pas de coupe, et on incline plus fortement la flèche lorsque l'andain est déposé à gauche dans le pas de coupe, pour que l'andain réalisé au passage précédent s'étende entre les roues du tracteur.

Il est évident que l'inclinaison de la flèche de traction 3 et l'inclinaison des volets 19', 29' seront avantageusement effectuées simultanément.

Bein entendu, si en fonction de la largeur de coupe, la forte inclinaison d'un des deux déflecteurs n'est pas suffisante pour désaxer l'andain, on pourra avantageusement disposer plusieurs groupes d'accélération et de regroupement côte à côte. On pourra d'ailleurs même en prévoir en nombre tel que l'andain soite déposé dans la largeur du pas de coupe précédent.

On a décrit plus haut des tambours cylindriques de séparation et d'accélération à pales intercalées les unes entre les autres. L'invention s'applique également à des tambours tangents entre eux, à des tambours coniques. On a vu également qu'on pouvait disposer plusieurs groupes de tambours en ligne. Il peut s'agir d'une ligne transversale à la machine ou sensiblement inclinée.

De même, on a décrit une machine avec un conditionneur à griffes rotatives. La machine pourrait tout aussi bien comporter un conditionneur à rouleaux ou tout autre conditionneur analogue. Cependant, et comme on l'a vu, si un conditionneur est prévu, il est important que la séparation du fourrage ait lieu après le conditionnement, sinon le conditionneur le rassemblerait à nouveau.

## Revendications

1. Faucheuse-andaineuse, notamment à grande largeur de coupe, comprenant des moyens de coupe (4) et de conditionnement (5) de végétaux, et, disposés, par rapport au sens d'avancement de la faucheuse, derrière les moyens de coupe (4) et de conditionnement (5), des moyens (13, 14) de séparation du flux des végétaux coupés en plusieurs flux de végétaux et des moyens de regroupement (19, 29) en andain de chaque flux de végétaux séparé, faucheuse-andaineuse caractérisée par le fait que les moyens de séparation comprennent au moins un tambour rotatif (13, 14) à axe sensiblement vertical, qui est associé aux moyens de regroupement (19, 29), et que des volets (15, 35) sont montés sur chaque tambour rotatif (13, 14) afin d'éviter son bourrage en améliorant la préhension du flux de végétaux, chaque tambour rotatif étant amovible.

2. Faucheuse-andaineuse selon la revendication 1, dans laquelle le ou les tambour(s) rotatif(s) (13, 14) et les volets (15, 35) sont agencés pour pouvoir être fixés dans les parties centrales et latérales de la faucheuse.

3. Faucheuse-andaineuse selon l'une des revendications 1 et 2, dans laquelle les moyens de regroupement (19, 29) sont orientables et la faucheuse possède un timon de traction (3) orientable.

4. Faucheuse-andaineuse selon l'une des revendications 1 à 3, comprenant au moins une paire de tambours rotatifs (13, 14) à axes sensiblement verticaux.

5. Faucheuse-andaineuse selon la revendication 4, dans laquelle il est prévu un tambour de gauche (13), par rapport au sens d'avancement de la faucheuse, tournant dans le sens inverse des aiguilles d'une montre, et un tambour de droite (14) tournant dans le sens des aiguilles d'une montre.

6. Faucheuse-andaineuse selon l'une des revendications 4 et 5, comprenant plusieurs paires de tambours rotatifs (13, 14).

7. Faucheuse-andaineuse selon l'une des revendications 1 à 6, dans laquelle les moyens de regroupement (19, 29) sont disposés derrière les tambours rotatifs (13, 14) par rapport au sens d'avancement de la faucheuse.

8. Faucheuse-andaineuse notamment à grande largeur de coupe, comprenant des moyens de coupe (4) et de conditionnement (5) de végétaux, et, disposés, par rapport au sens d'avancement de la faucheuse, derrière les moyens de coupe (4) et de conditionnement (5) et près des bords latéraux de la faucheuse; des moyens de regroupement (19', 29') en andain des végétaux coupés, caractérisée par le fait que les moyens de regroupement (19', 29') sont associés à des tambours rotatifs (13', 14') à axe sensiblement vertical, disposés devant les moyens de regroupement (19', 29') par rapport au sens d'avancement de la machine, lesdits tambours étant amovibles et munis de volets (15, 35) afin d'éviter le bourrage des tambours en améliorant la préhension du flux des végétaux.

9. Procédé de regroupement de deux andains (30) formés lors de deux passages successifs d'une faucheuse-andaineuse selon la revendication 8 comprenant, au moins, une flèche de traction orientable (3) des moyens de coupe (4) des végétaux, et des moyens orientables (19', 29') de regroupement des végétaux situés respectivement sur les bords droit et gauche de la faucheuse-andaineuse, et disposés, par rapport au sens d'avancement de la faucheuse, derrière les moyens de coupe (4), procédé dans lequel lors d'un premier passage on forme un andain à droite, par rapport à l'axe central d'avancement de la faucheuse-andaineuse, les moyens de regroupement (19', 29') des bords droit et gauche étant respectivement redressés et fortement inclinés, et lors du passage suivant, on forme un autre andain à gauche, les moyens de regroupement (19', 29') étant respectivement fortement inclinés et redressés, caractérisé en ce que la flèche de traction (3), lors du premier passage, est fortement inclinée et lors du passage suivant, faiblement inclinée, ou vice et versa.

## Patentansprüche

1. Schwadmäher, insbesondere solcher mit einer großen Schnittbreite, bestehend aus Mitteln zum Schneiden (4) und zum Ablegen (5) des pflanzlichen Schnittgutes, und, hinsichtlich der vorwärtsrichtung des Mähers, hinter den Mitteln zum Schneiden (4) und dem Mitteln zum Ablegen (5) angeordneten Mitteln (13, 14) zum Aufteilen des Schnittgutstromes in mehrere Schnittgutströme, und Mitteln (19, 20) zum Umlegen jedes einzelnen Schnittgutstroms in einen Schwad, dadurch gekennzeichnet, daß die Mittel zum Aufteilen aus mindestens einer, mit einer im wesentlichen vertikalen Achse, rotierenden Trommel (13, 14), die den Mitteln zum Umlegen (19, 29) zugeordnet ist, bestehen, und daß Flügel (15, 35) an jeder der rotierenden Trommel (13, 14) angebracht sind, um mit einer Verbesserung des Ergreifens des Schnittgutstroms eine Stauung zu vermeiden, wobei jede der rotierenden Trommel abnehmbar ist.

2. Schwadmäher nach Anspruch 1, dadurch gekennzeichnet, daß der oder die rotierende(n) Trommel(n) (13, 14) und die Flügel (15, 35) derart ausgebildet sind, daß sie an den zentralen und seitlichen Teilen des Schwadmähers befestigt werden können.

3. Schwadmäher nach einem der Ansprüche 1 und 2, dadurch gekennzeichnet, daß die Mittel zum Umlegen (19, 29) ausrichtbar sind und daß der Schwadmäher eine ausrichtbare Zugwelle (3) besitzt.

4. Schwadmäher nach einem der Ansprüche 1 bis 3, bestehend aus mindestens einem mit im wesentlichen vertikalen Achsen rotierenden Trommelpaar (13, 14).

5. Schwadmäher nach Anspruch 4, wobei, hinsichtlich der Vorwärtsrichtung des Schwadmähers, eine gegen den Uhrzeigersinn drehende linke Trommel (13) und eine im Uhrzeigersinn drehende rechte Trommel (14) vorgesehen sind.

6. Schwadmäher nach einem Anspruch 4 oder 5, bestehend aus mehreren rotierenden Trommelpaaren (13, 14).

7. Schwadmäher nach einem der vorangehenden Ansprüchen, dadurch gekennzeichnet, daß die Mittel zum Umlegen (19, 29) hinter den rotierenden Trommeln (13, 14), hinsichtlich der Vorwärtsrichtung des Schwadmähers, angeordnet sind.

8. Schwadmäher, insbesondere solche mit großer Schnittbreite, bestehend aus Mitteln zum Schneiden (4) und zum Ablegen (5) des pflanzlichen Schnittguts, die, hinsichtlich der Vorwärtsrichtung des Schwadmähers, hinter den Mitteln zum Schneiden (4) und zum Umlegen (5) und nahe den seitlichen Kanten des Schwadmähers angeordnet sind, und Mitteln zum Umlegen (19', 29') des Schnittguts in einen Schwad, dadurch gekennzeichnet, daß den Mitteln zum Umlegen (19', 29'), rotierenden Tromme in (13', 14'), mit einer im wesentlichen vertikalen Achse, zugeordnet sind, und vor den Mitteln zum Umlegen (19', 29'), hinsichtlich der Zentralen Vorwärtsachse der Maschine, angebracht sind, wobei die genannten Trommel abnehmbar und mit Flügeln (15, 35) versehen sind, um mit einer Verbesserung des Ergreifens des Schnittgutstroms eine Stauung der Trommel zu vermeiden.

9. Verfahren zum Umlegen der beiden Schwade (30), die während zweier aufeinanderfolgenden Bahnen eines Schwadmähers nach Anspruch 8 gebildet worden sind, wobei der Schwadmäher versehen ist mit mindestens einer ausrichtbaren Zugwelle (3), Mitteln zum Schneiden (4) des Schnittguts und ausrichtbaren Mitteln zum Umlegen (19', 29'), die jeweils an den rechten und linken Kanten des Schwadmähers angeordnet sind und, hinsichtlich der Vorwärtsrichtung des Schwadmähers, hinter den Mitteln zum Schneiden (4) liegen, wobei während einer ersten Bahn ein rechter Schwad, an der vorderen Mittelachse des Schwadmähers, geformt wird, und die Mittel zum Umlegen (19', 29') an den rechten und linken Kanten jeweils aufgerichtet und stark schräg sind, und während der folgenden Bahn ein weiterer Schwad links abgelegt wird, und die Mittel zum Umlegen (19', 29') jeweils stark schräg und aufgerichtet sind, dadurch gekennzeichnet, daß die Zugwelle (3) während der ersten Bahn stark schräg und während der nächsten Bahn leicht schräg ist, oder umgekehrt.

**Claims**

1. Mowing-windrowing machine, particularly one with a wide sweep of cut, comprising means (4) for cutting and means (5) for conditioning vegetation, and means (13, 14) for separating the flux of cut vegetation into several fluxes of vegetation, disposed behind the cutting and conditioning means (4, 5), with respect to the direction of advance of the machine, and means (19, 29) for grouping into a windrow each separated flux of vegetation, mowing-windrowing machine characterized in that the separating means comprise at least a rotatable drum (13, 14) of substantially vertical axis, which is associated with the growing means (19, 29) and that flaps (15, 35) are mounted on each rotatable drum (13, 14) so that to avoid its clogging by improving the handling of the flux of vegetation, each rotatable drum being removable.

2. The mowing-windrowing machine of claim 1, wherein the rotatable drum(s) (13, 14) and the flaps (15, 35) are arranged to be fixed in the central and lateral parts of the mowing-machine.

3. The mowing-windrowing machine of one of claims 1 and 2, wherein the grouping means (19, 29) are pivotable and the mowing machine is provided with a pivotable tow bar (3).

4. The mowing-windrowing machine of one of claims 1 to 3, comprising at least one pair of rotatable drums (13, 14) of substantially vertical axes.

5. The mowing-windrowing machine of claim 4, wherein a left-hand drum (13), with respect to the direction of advance of the machine, rotating in anti-clockwise direction, and a right-hand drum (14), rotating in clockwise direction, are provided.

6. The mowing-windrowing machine of one of claims 4 and 5, comprising several pairs of rotatable drums (13, 14).

7. The mowing-windrowing machine of one of claims 1 to 6, wherein the grouping means (19, 29) are disposed behind the rotatable drums (13, 14) with respect to the direction of advance of the machine.

8. Mowing-windrowing machine, particularly one with a wide sweep of cut, comprising means (4) for cutting and means (5) for conditioning vegetation and disposed behind the cutting and conditioning means (4, 5) and near the lateral edges of the mowing machine, with respect to the direction of advance of the mowing machine, means (19', 29') for grouping into a windrow the cut vegetation, characterized in that the grouping means (19', 29') are associated with rotatable drums (13', 14') of substantially vertical axis, disposed in front of the grouping means (19', 29') with respect to the direction of advance of the machine, said drums being removable and provided with flaps (15, 25) so that to avoid the clogging of the drums by improving the handling of the flux of vegetation.

9. Process for grouping together two windrows (30) formed during two successive passages of a mowing-windrowing machine of claim 8 comprising at least a pivotable tow bar (3), means (4) for cutting vegetation, and pivotable means (19', 29') for grouping together the vegetation, respectively disposed on the right-hand and left-hand sides of the machine and, with respect to the direction of advance of the machine, behind the cutting means (4), process, in which, during one passage, a windrow is formed to the right, with respect to the central axis of advance of the machine, the grouping means (19', 29') of the right-hand and left-hand sides, being respectively straightened up and greatly inclined, and during the following passage, another window is formed to the left, the grouping means (19', 29') being respectively greatly inclined and straightened up characterized in that, during the first passage, the tow bar (3) is greatly inclined and during the following passage, slightly inclined, or vice versa.

FIG . 1

FIG. 2

FIG _ 3

FIG . 4

FIG.5

FIG.6